# EUROPEAN PATENT APPLICATION

(11) **EP 2 565 676 A1**
(43) Date of publication of application: **06.03.2013**
(21) Application number: 12183219.0
(22) Date of filing: 05.09.2012
(51) Int. Cl.: G01S 19/22

(54) **Apparatus and method for correcting position information of portable terminal in multi-path zone**

(30) Priority: 05.09.2011 KR 20110089371
(71) Applicant: Samsung Electronics Co., Ltd., Suwon-si, Gyeonggi-do, 443-742 (KR)
(72) Inventor: Yoon, Seung-Hyun, Gyeonggi-do (KR)
(74) Representative: Jenkins, Richard Gavin

(57) **Abstract**

An apparatus and method correct position information of a portable terminal in a multi-path zone. The method includes determining whether the portable terminal has entered a multi-path zone, and detecting a second GPS satellite transmitting accurate position information, among one or more first GPS satellites transmitting position information to the portable terminal, when the portable terminal has entered the multi-path zone. The method also includes receiving position information of the portable terminal from the second GPS satellite, and storing coordinates of the second GPS satellite.

## Description

### TECHNICAL FIELD OF THE INVENTION

The present disclosure relates generally to an apparatus and method for correcting position information of a portable terminal, and in particular, to an apparatus and method for correcting position information of a portable terminal in a multi-path zone.

### BACKGROUND OF THE INVENTION

The popularity of smart phones capable of acquiring position information like a Global Positioning System (GPS) creates various services and data associated with area information in mobile environments. In most cases, Global Navigation Satellite System (GNSS) satellites and GPS satellites are used to acquire position information provided by smart phones in outdoor areas. The integration of sensor technology and map matching technology with GPS information provides a great improvement in the accuracy of outdoor positioning information.

However, in an area including many tall buildings (e.g., a downtown area), the line-of-sight paths between a portable terminal and GPS satellites are blocked by the buildings adjacent to the portable terminal, thus making it difficult for the portable terminal to detect the GPS satellite from which the portable terminal can receive an accurate GPS signal. Also, this causes the multi-path effect of the portable terminal receiving GPS signals reflected by the adjacent buildings, thus greatly reducing the accuracy of position information.

### SUMMARY OF THE INVENTION

To address the above-discussed deficiencies of the prior art, it is a primary object to provide at least the advantages below. Accordingly, an object of the present disclosure is to provide an apparatus and method for correcting position information of a portable terminal in a multi-path zone, which can receive accurate position information by comparing GPS position information before entry into the multi-path zone with GPS position information after entry into the multi-path zone.

Another object of the present disclosure is to provide an apparatus and method for correcting position information of a portable terminal in a multi-path zone, which can receive accurate position information in a multi-path environment by using a prestored multi-path database.

A method for correcting position information of a portable terminal in a multi-path is provided. The method includes determining whether the portable terminal has entered a multi-path zone, and detecting a second GPS satellite transmitting accurate position information, among one or more first GPS satellites transmitting position information to the portable terminal, when the portable terminal has entered the multi-path zone. The method also includes receiving position information of the portable terminal from the second GPS satellite, and storing coordinates of the second GPS satellite.

A method for correcting position information of a portable terminal in a multi-path is provided. The method includes (1) determining whether the portable terminal will enter a multi-path zone; (2) searching a multi-path database prestored in the portable terminal, when the portable terminal will enter the multi-path zone; (3) selecting Global Positioning System (GPS) satellites close to second GPS position coordinates prestored in the multi-path database, among one or more first GPS satellites transmitting position information to the portable terminal; (4) determining whether the portable terminal has entered the multi-path zone; and (5) receiving position information from the selected GPS satellites, when the portable terminal has entered the multi-path zone.

An apparatus for correcting position information of a portable terminal in a multi-path is provided. The apparatus includes a positioning process unit configured to detect a second Global Positioning System (GPS) satellite transmitting accurate position information, among one or more first GPS satellites transmitting position information to the portable terminal, when the portable terminal has entered a multi-path zone. The apparatus also includes a GPS module configured to receive position information of the portable terminal from the second GPS satellite. The apparatus further includes a map database configured to determine whether the portable terminal has entered the multi-path zone, and store coordinates of the second GPS satellite.

An apparatus for correcting position information of a portable terminal in a multi-path is provided. The apparatus includes a positioning process unit configured to search a multi-path database prestored in the portable terminal, when the portable terminal will enter a multi-path zone, and select Global Positioning System (GPS) satellites close to second GPS position coordinates prestored in the multi-path database, among one or more first GPS satellites transmitting position information to the portable terminal. The apparatus also includes a map database configured to determine whether the portable terminal will enter a multi-path zone and determine whether the portable terminal has entered the multi-path zone. The apparatus further includes a GPS module configured to receive position information from the selected GPS satellites, when the portable terminal has entered the multi-path zone.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates an apparatus for correcting position information of a portable terminal in a multi-path zone according to an embodiment of the present disclosure;

FIG. 2 illustrates a method of receiving position information from a GPS satellite in a method for correcting position information of a portable terminal in a multi-path zone according to an embodiment of the present disclosure;

FIG. 3 illustrates the occurrence of a multi-path error in position information of a receiver in a method for correcting position information of a portable terminal in a multi-path zone according to an embodiment of the present disclosure;

FIG. 4 illustrates a method of transmitting accurate position information from a GPS satellite in a method for correcting position information of a portable terminal in a multi-path zone according to an embodiment of the present disclosure;

FIG. 5 illustrates a process of creating a multi-path database in a method for correcting position information of a portable terminal in a multi-path zone according to an embodiment of the present disclosure; and

FIG. 6 illustrates a process of calculating coordinates by a multi-path database in a method for correcting position information of a portable terminal in a multi-path zone according to an embodiment of the present disclosure.

### DETAILED DESCRIPTION OF THE INVENTION

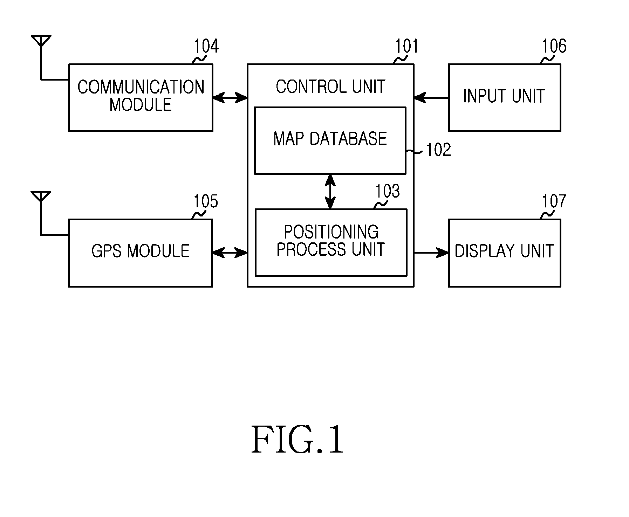

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless system. Exemplary embodiments of the present disclosure will be described herein below with reference to the accompanying drawings. In the following description, detailed descriptions of well-known functions or configurations will be omitted since they would unnecessarily obscure the subject matters of the present disclosure. Also, like elements denote like elements throughout the drawings.

The present invention may be implemented in an electronic device including a portable terminal such as, for example, a smart phone and a mobile telecommunication terminal. Hereunder, a portable terminal is used as an example for the electronic device.

FIG. 1 is a block diagram illustrating an apparatus for correcting position information of a portable terminal in a multi-path zone according to an embodiment of the present disclosure.

Referring to FIG. 1, the apparatus may include a control unit 101, a map database 102, a positioning process unit 103, a communication module 104, a GPS module 105, an input unit 106, and a display unit 107.

The control unit 101 controls an overall operation of the portable terminal. The control unit 101 may include the map database 102 and the positioning process unit 103.

The map database 102 stores information about zones having satellite signal errors caused by the multi-path effect due to the influence of external topography, and the coordinates of optimal satellites available in relevant zones. For example, the map database determines whether the portable terminal will enter or has entered a multi-path zone, and stores the coordinates of second GPS satellites that transmit accurate position information. Also, the map database 102 is connected to the communication module 104 and transmits a prestored multi-path database to the communication module 104.

The positioning process unit 103 is connected to the communication module 104, determines an optimal satellite by a multi-path database received through the communication module 104, and provides the relevant information to the GPS module 105 to acquire the optimal position information.

For example, when the portable terminal will enter a multi-path zone, the positioning process unit 103 searches for a multi-path database prestored in the portable terminal, and selects GPS satellites close to second GPS position coordinates prestored in the multi-path database, among four or more first GPS satellites transmitting position information to the portable terminal.

Also, when the portable terminal has entered a multi-path zone, the positioning process unit 103 searches for second GPS satellites transmitting accurate position information, among four or more first GPS satellites transmitting position information to the portable terminal, and compares and searches for stored position information before the entry of the portable terminal into the multi-path zone, and the coordinates of each four GPS satellites of the first GPS satellites after the entry of the portable terminal into the multi-path zone.

The communication module 104 processes signals transmitted and received through an antenna for voice and data communication. For example, the communication module 104 connects with the map database 102, receives a multi-path database (e.g., the coordinates of the second GPS satellite transmitting accurate position information) from the map database 102, and transmits the same to a server.

The GPS module 105 receives navigation signals and GPS signals and analyzes the same. For example, when the portable terminal has entered a multi-path zone, the GPS module 105 receives position information from the second GPS satellites transmitting accurate position information.

The input unit 106 provides the control unit 101 with input data generated according to a user's selection. For example, the input unit 106 receives an input of a command that indicates approval of the transmission of the coordinates of the second GPS satellite, which transmits prestored accurate position information, to the server.

The display unit 107 displays the stored information, menu screen, and state information of the portable terminal under the control of the control unit 101. In some embodiments, the display unit 107 includes a touch screen.

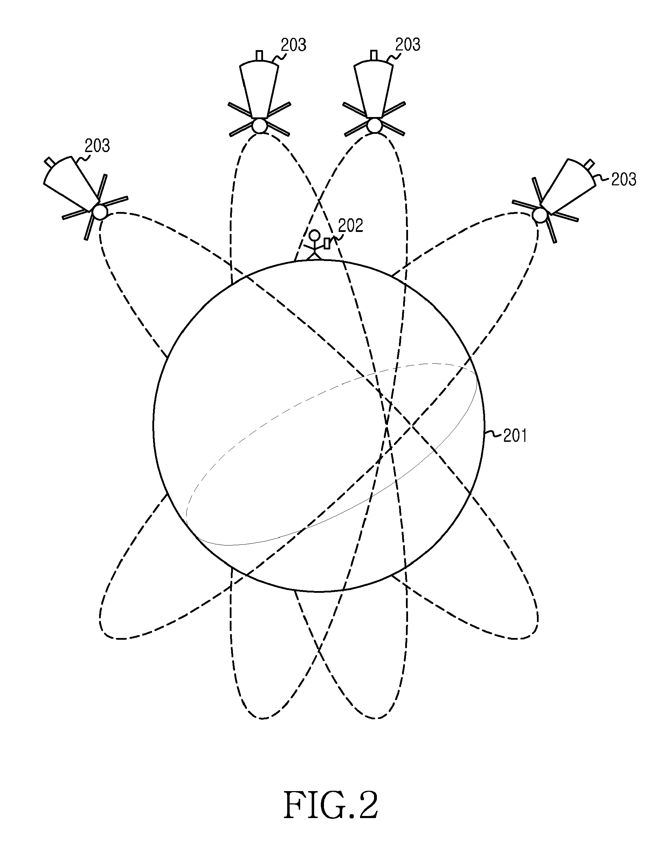

FIG. 2 is a diagram illustrating a process of receiving position information from a GPS satellite in a method for correcting position information of a portable terminal in a multi-path zone, according to an embodiment of the present disclosure.

There are presently a total of twenty-four (24) GPS satellites. Among them, twenty-one (21) GPS satellites are used for navigation, and three GPS satellites are reserved. All the GPS satellites orbit the earth at an altitude of approximately 20,200 km with an orbital period of about twelve (12) hours and an orbital inclination of about 55 degrees relative to the equator. A total of six (6) orbital planes are spaced apart from each other by 60 degrees, and at least four (4) GPS satellites are located in each orbital plane.

This arrangement of GPS satellites on the earth's orbits allows four (4) to twelve (12) GPS satellites to be able to be detected simultaneously at any point on the earth. Using some calculation methods, in order to determine position information of a receiver, it is necessary to receive position information from at least four (4) GPS satellites. The reason for this is that it is necessary to determine four (4) unknown quantities using a combination of three-dimensional coordinates and time in order to calculate the position, speed, and time of a receiver by processing signals received from GPS satellites.

FIG. 2 illustrates that a receiver 202 can receive position information from four (4) GPS satellites 203. That is, although position information can be received from up to twelve (12) GPS satellites, position information is received from at least four (4) GPS satellites to calculate the position of the receiver 202.

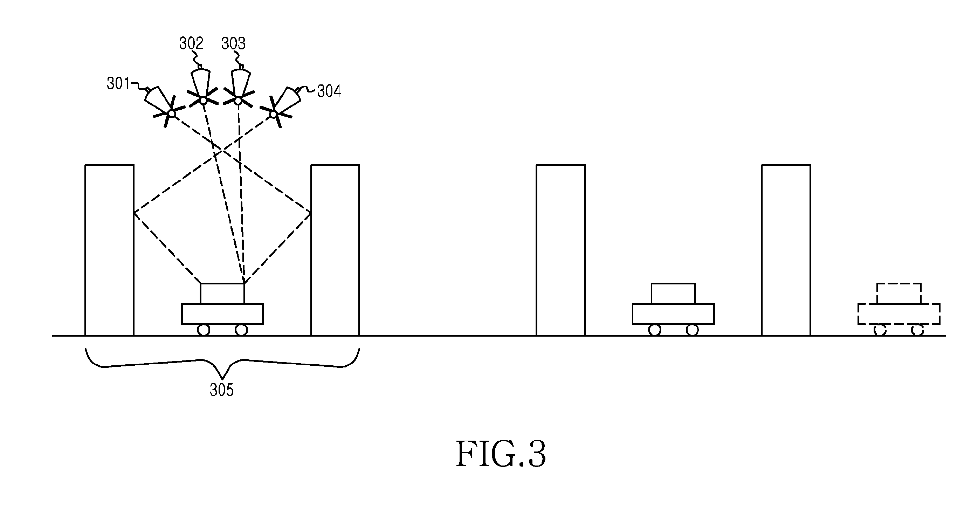

FIG. 3 is a diagram illustrating the occurrence of a multi-path error in position information of a receiver in a method for correcting position information of a portable terminal in a multi-path zone according to an embodiment of the present disclosure.

First, principles of calculating position information of a receiver by receiving GPS satellite signals will now be described. The GPS uses a triangulation method. One triangulation method determines the position of an unknown point by measuring the degrees of two angles between the unknown point and two known points and the length of a side between the two known points. Unlike the aforementioned triangulation method, the GPS determines the location of an unknown point by measuring the lengths of two sides with the unknown point there between. That is, the distance from a GPS satellite to a receiver can be calculated by multiplying the velocity of light and the difference between the departure time of data from the GPS satellite and the arrival time of the data at the receiver.

A multi-path signal is not a signal received directly from a GPS satellite, but a reflected signal thereof. The reflected signal is received from the GPS satellite through the longer, reflected path, resulting in incorrect position measurement. FIG. 3 illustrates the occurrence of a multi-path error in position information of a receiver. It is assumed that a receiver is located in a downtown area 305 including tall buildings and receives position information from GPS satellites 301 to 304 as illustrated in the left side of FIG. 3. Among the GPS satellites 301 to 304, two GPS satellites 302 and 303 transmit accurate position information to the receiver and two GPS satellites 301 and 304 transmit position information with a multi-path error to the receiver. As described above, the receiver should receive accurate position information from at least four (4) GPS satellites in order to accurately calculate the position of the receiver. However, the receiver receives inaccurate position information from the GPS satellites 301 and 304, which transmit position information with a multi-path error. Thus, the receiver displays incorrect position information, as represented by dotted lines in the right side of FIG. 3.

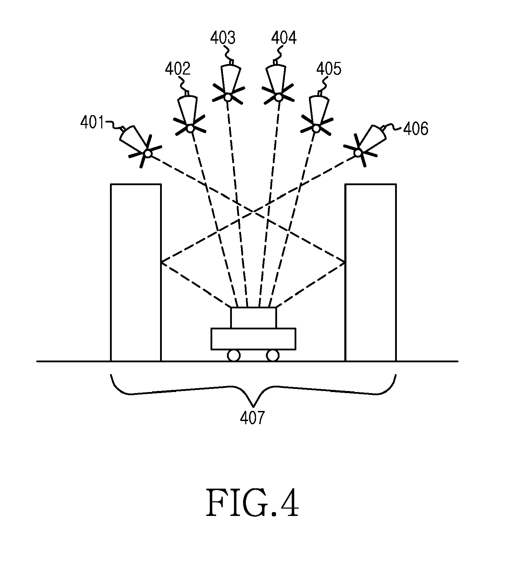

FIG. 4 is a diagram illustrating a method of transmitting accurate position information from a GPS satellite in a method for correcting position information of a portable terminal in a multi-path zone according to an embodiment of the present disclosure.

Referring to FIG. 4, it is assumed that a receiver is located in a downtown area 407 including tall buildings and receives position information from GPS satellites 401 to 406. Before entry into a multi-path zone, the receiver stores position information received from the GPS satellites 401 to 406. After entry into the multi-path zone, the receiver compares the prestored position information with the coordinates of a four-by-four combination of the GPS satellites 401 to 406 and detects the GPS satellite transmitting accurate position information.

In the above embodiment, a four-by-four combination of a total of six (6) GPS satellites results in a total of thirty (30) combinations. When the four GPS satellites 402 to 405 (except the GPS satellites 401 and 406 causing a multi-path phenomenon, among the 6 GPS satellites) are combined, the receiver may receive the most accurate position information. Thereafter, the received position information may be compared with the prestored position information to acquire information about the position that is closest to the current position of the receiver. Thus, the receiver may store the coordinates of the GPS satellite while in a place associated with a multi-path phenomenon, and use the stored GPS satellite coordinates when passing through the same place. Also, the receiver may upload the stored GPS satellite coordinates to a server so that the same user or another user may also receive accurate position information by downloading the stored GPS satellite coordinates from the server when approaching the place associated with a multi-path phenomenon.

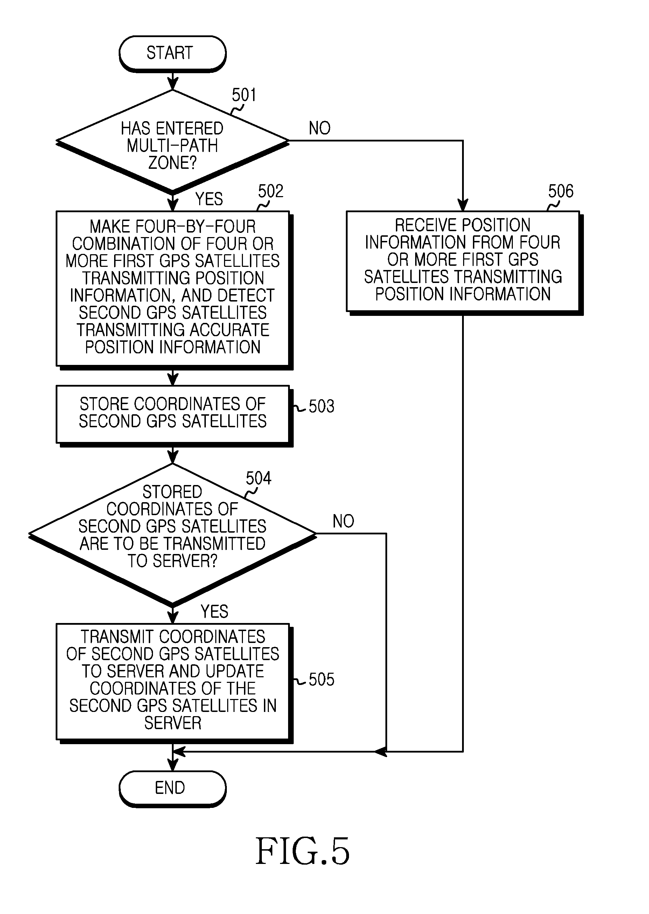

FIG. 5 is a flow diagram illustrating a process of creating a multi-path database in a method for correcting position information of a portable terminal in a multi-path zone according to an embodiment of the present disclosure.

Referring to FIG. 5, in block 501, the method determines whether the portable terminal has entered a multi-path zone. The portable terminal receiving position information from a GPS satellite displays its current position on its display unit. For example, when the position of a user changes suddenly, it may be determined that the portable terminal has entered a multi-path zone. For example, a control unit of the portable terminal may detect a position change and notify the position change to the user in a voice or audible indication.

Upon a determination that the portable terminal has entered a multi-path zone (in block 501), the method proceeds to block 502. In block 502, the method makes a four-by-four combination of four or more first GPS satellites transmitting position information, and detects second GPS satellites transmitting accurate position information. Specifically, the method detects the second GPS satellites by comparing position information stored before entry into the multi-path zone with the coordinates of a four-by-four combination of the first GPS satellites after entry into the multi-path zone. That is, the method detects the second GPS satellites transmitting accurate position information, except the GPS satellite causing a multi-path phenomenon.

Upon detection of the second GPS satellites transmitting accurate information, the method stores the coordinates of the second GPS satellites in the portable terminal in block 503. In block 504, the method inquires of the user whether to transmit the stored coordinates of the second GPS satellites to a server. When the portable terminal receives a command from the user indicating approval of transmission of the stored coordinates of the second GPS satellites to the server (in block 504), the method transmits the coordinates of the second GPS satellites to the server and automatically updates the received coordinates of the second GPS satellites in the server, in block 505. Thereafter, the process is ended.

Alternatively, upon a determination that the portable terminal has not entered a multi-path zone (in block 501), the method proceeds to block 506. In block 506, because the currently-received position information is accurate position information, the method receives position information from the first GPS satellites. Also, when the portable terminal receives a command from the user indicating disapproval of transmission of the stored coordinates of the second GPS satellites to the server (in block 504), the method stores the position information in the portable terminal without transmitting the same to the server.

The method described above in relation with FIG. 5 under of the present invention may be provided as one or more instructions in one or more software modules, or computer programs stored in an electronic device including a portable terminal.

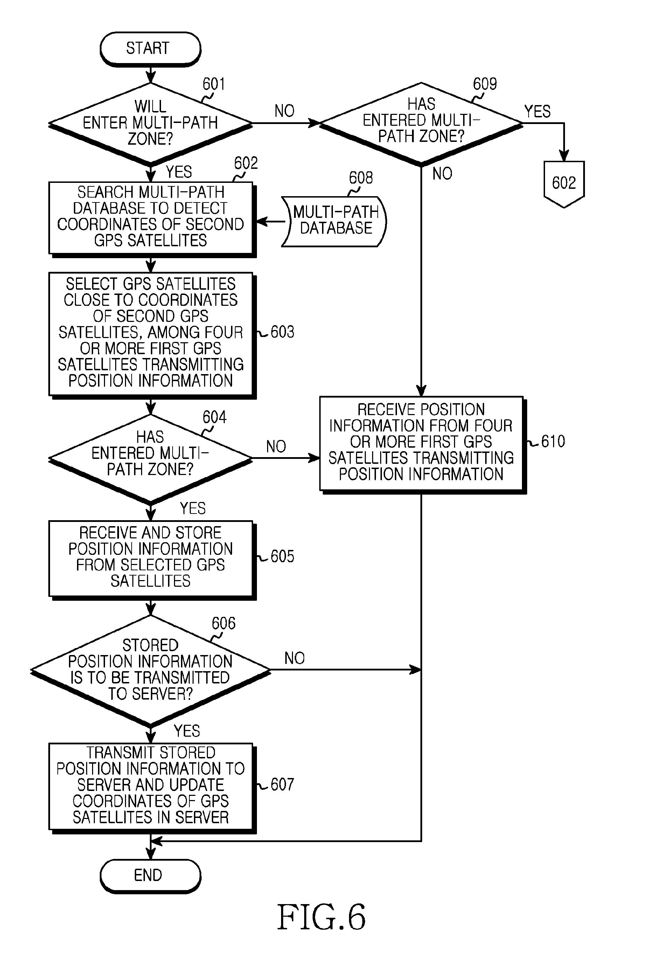

FIG. 6 is a flow diagram illustrating a process of calculating coordinates by a multi-path database in a method for correcting position information of a portable terminal in a multi-path zone according to an embodiment of the present disclosure.

Referring to FIG. 6, in block 601, the method determines whether the portable terminal will enter a multi-path zone. When determining that the portable terminal will enter a multi-path zone (in block 601), the method proceeds to block 602. In block 602, the method detects the coordinates of second GPS satellites in the multi-path zone (i.e., the coordinates of the GPS satellite transmitting accurate position information) by using a multi-path database 608 that is prestored in the portable terminal or is stored in a server.

Upon detecting the position information of the second GPS satellites, the method selects the GPS satellites close to the coordinates of the second GPS satellites, among four or more first GPS satellites transmitting position information, in block 603. That is, because the coordinates of the second GPS satellites stored in the multi-path database are reliable position coordinates, the method compares the coordinates with the same to select the GPS satellites closest to the coordinates of the second GPS satellites, among the first GPS satellites transmitting position information to the portable terminal.

Upon selecting the GPS satellites closest to the coordinates of the second GPS satellites, the method determines whether the portable terminal has entered a multi-path zone, in block 604. When determining that the portable terminal has entered a multi-path zone (in block 604), the method proceeds to block 605. In block 605, the method receives position information from the GPS satellites selected in block 603, and stores the position information in the portable terminal. In block 606, the method inquires of the user whether to transmit the coordinates of the selected GPS satellites to the server. When the portable terminal receives a command from the user indicating approval of transmission of the coordinates of the selected GPS satellites to the server (in block 606), the method transmits the coordinates of the selected GPS satellites to the server and automatically updates the received coordinates of the selected GPS satellites in the server, in block 607. Thereafter, the process is ended.

Alternatively, upon a determination that the portable terminal will not enter a multi-path zone (in block 601), the method determines whether the portable terminal has entered a multi-path zone, in block 609. When determining that the portable terminal has entered a multi-path zone (in block 609), the method repeats the blocks 602 to 607. Alternatively, when determining that the portable terminal has not entered a multi-path zone (in block 609), the method proceeds to block 610. In block 610, because the currently-received position information is accurate position information, the method receives position information from the first GPS satellites. Also, when the portable terminal receives a command from the user indicating disapproval of transmission of the coordinates of the selected GPS satellites to the server (in block 606), the method stores the position information in the portable terminal without transmitting the position information to the server.

The method described above in relation with FIG. 6 under of the present invention may be provided as one or more instructions in one or more software modules, or computer programs stored in an electronic device including a portable terminal.

Embodiments of the present invention according to the claims and description in the specification can be realized in the form of hardware, software or a combination of hardware and software.

Such software may be stored in a computer readable storage medium. The computer readable storage medium stores one or more programs (software modules), the one or more programs comprising instructions, which when executed by one or more processors in an electronic device, cause the electronic device to perform methods of the present invention.

Such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the disclosure has been shown and described with reference to certain exemplary embodiments thereof, it will be understood by those skilled in the art that various changes in form and details may be made therein without departing from the spirit and scope of the disclosure as defined by the appended claims. Therefore, the scope of the disclosure is defined not by the detailed description of the disclosure but by the appended claims, and all differences within the scope will be construed as being included in the present disclosure.

## Claims

1. A method for correcting position information of a portable terminal in a multi-path, comprising:
determining whether the portable terminal has entered a multi-path zone;
detecting a second Global Positioning System (GPS) satellite (203, 301-304, 401-406) transmitting accurate position information, among one or more first GPS satellites (203, 301-304, 401-406) transmitting position information to the portable terminal, when the portable terminal has entered the multi-path zone;
receiving position information of the portable terminal from the second GPS satellite; and
storing coordinates of the second GPS satellite.

2. The method of claim 1, wherein detecting the second GPS satellite comprises:
comparing position information stored before entry of the portable terminal into the multi-path zone with coordinates of a four-by-four combination of the first GPS satellites after the entry of the portable terminal into the multi-path zone.

3. The method of claim 1, further comprising:
inquiring whether to transmit the stored coordinates of the second GPS satellite to a server; and
transmitting the coordinates of the second GPS satellite to the server upon receiving a command indicating approval of the transmission of the stored coordinates of the second GPS satellite to the server.

4. A method for correcting position information of a portable terminal in a multi-path, comprising:
(1) determining whether the portable terminal will enter a multi-path zone;
(2) searching a multi-path database (102) prestored in the portable terminal, when the portable terminal will enter the multi-path zone;
(3) selecting Global Positioning System (GPS) satellites (203, 301-304, 401-406) close to second GPS position coordinates prestored in the multi-path database, among one or more first GPS satellites (203, 301-304, 401-406) transmitting position information to the portable terminal;
(4) determining whether the portable terminal has entered the multi-path zone; and
(5) receiving position information from the selected GPS satellites, when the portable terminal has entered the multi-path zone.

5. The method of claim 4, further comprising, upon determining that the portable terminal will not enter the multi-path zone in operation (1):
determining whether the portable terminal has entered the multi-path zone;
searching the multi-path database when the portable terminal has entered the multi-path zone; and
performing the operations (3), (4) and (5).

6. The method of claim 4, further comprising, upon determining that the portable terminal has not enter the multi-path zone in operation (4):
searching the multi-path database prestored in the portable terminal; and
performing the operations (3), (4) and (5).

7. The method of claim 4, further comprising:
downloading the multi-path database that is updated and stored in a server; and
storing the downloaded multi-path database.

8. The method of claim 4, wherein the multi-path database stores the coordinates of a second GPS satellite (203, 301-304, 401-406) transmitting accurate position information, among the coordinates of the first GPS satellites transmitting position information to the portable terminal.

9. The method of claim 4, further comprising:
receiving and storing the position information;
inquiring whether to transmit the stored position information to a server; and
transmitting the position information to the server upon receiving a command indicating approval of transmission of the stored position information to the server.

10. An apparatus for correcting position information of a portable terminal in a multi-path, comprising:
a positioning process unit (103) configured to detect a second Global Positioning System (GPS) satellite transmitting accurate position information, among one or more first GPS satellites transmitting position information to the portable terminal, when the portable terminal has entered a multi-path zone;
a GPS module (105) configured to receive position information of the portable terminal from the second GPS satellite; and
a map database (102) configured to determine whether the portable terminal has entered the multi-path zone, and store coordinates of the second GPS satellite.

11. The apparatus of claim 10, further comprising:
an input unit (106) configured to receive a command indicating approval of transmission of the stored coordinates of the second GPS satellite to a server; and
a communication module (104) configured to transmit the coordinates of the second GPS satellite to the server.

12. An apparatus for correcting position information of a portable terminal in a multi-path, comprising:
a positioning process unit (103) configured to search a multi-path database prestored in the portable terminal, when the portable terminal will enter a multi-path zone, and select Global Positioning System (GPS) satellites close to second GPS position coordinates prestored in the multi-path database, among one or more first GPS satellites transmitting position information to the portable terminal;
a map database (102) configured to determine whether the portable terminal will enter a multi-path zone and determine whether the portable terminal has entered the multi-path zone; and
a GPS module (105) configured to receive position information from the selected GPS satellites, when the portable terminal has entered the multi-path zone.

13. The apparatus of claim 12, wherein:
the map database is configured to determine whether the portable terminal has entered the multi-path zone, when the portable terminal will not enter the multi-path zone;
the positioning process unit is configured to elect GPS satellites close to second GPS position coordinates prestored in the multi-path database, among one or more first GPS satellites transmitting position information to the portable terminal, when the portable terminal has entered the multi-path zone; and
the GPS module is configured to receive position information from the selected GPS satellites, when the portable terminal has entered the multi-path zone.

14. The apparatus of claim 12, wherein:
the positioning process unit is configured to select GPS satellites close to second GPS position coordinates prestored in the multi-path database, among one or more first GPS satellites transmitting position information to the portable terminal, when the portable terminal has not entered the multi-path zone;
the map database is configured to determine whether the portable terminal will enter a multi-path zone and determines whether the portable terminal has entered the multi-path zone; and
the GPS module is configured to receive position information from the selected GPS satellites, when the portable terminal has entered the multi-path zone.

15. The apparatus of claim 12, further comprising:
an input unit (106) configured to receive a command indicating approval of transmission of the coordinates of the selected GPS satellite to a server; and
a communication module (104) configured to transmit the coordinates of the selected GPS satellite to the server and wherein communication module for downloading the multi-path database that is updated and stored in a server.
